# EUROPÄISCHE PATENTSCHRIFT

(11) **EP 3 003 612 B1**
(45) Veröffentlichungstag und Bekanntmachung des Hinweises auf die Patenterteilung: **29.07.2020**
(21) Anmeldenummer: 14718607.6
(22) Anmeldetag: 22.04.2014
(51) Int. Cl.: B23B 31/02

(54) **WERKZEUGSPANNSYSTEM**
TOOL CLAMPING SYSTEM
SYSTEME DE SERRAGE D'OUTIL

(30) Priorität: 06.06.2013 DE 102013105830
(43) Veröffentlichungstag der Anmeldung: 13.04.2016
(73) Patentinhaber: Bilz Werkzeugfabrik GmbH & Co. KG, 73760 Ostfildern (DE)
(72) Erfinder: FRONIUS, Jürgen, 74399 Walheim (DE)
(74) Vertreter: Witte, Weller & Partner Patentanwälte mbB
(86) Internationale Anmeldenummer: PCT/EP2014/058061
(87) Internationale Veröffentlichungsnummer: WO 2014/195058

(56) Entgegenhaltungen:
- DE-A1-102007 058 691
- DE-A1-102008 009 340
- DE-A1-102009 031 925
- JP-A- S5 877 430
- JP-A- 2003 266 209
- JP-Y1- S4 217 074
- US-A- 3 137 184
- US-A1- 2010 262 308

## Beschreibung

Die Erfindung betrifft ein Werkzeugspannsystem mit einem rotierend antreibbaren Werkzeughalter zum Spannen eines Werkzeugs.

Derartige Werkzeugspannsysteme sind seit Jahrzehnten bekannt und werden in vielfältiger Weise bei der spanenden Bearbeitung von Werkstücken eingesetzt.

Seit einigen Jahren wird bei manchen Bearbeitungszentren mit rotierendem Werkzeug gefordert, dass neben den üblichen spanenden Werkzeugen zum Teil auch messtechnische Anwendungen bzw. Überwachungen des Werkzeugs realisiert werden. Hierbei handelt es sich im Allgemeinen um Applikationen, bei denen ein Messsystem, meist beruhend auf elektromechanischen Prinzipien, auf eine Spindelschnittstelle montiert wird. So soll einerseits die Verbindung und Führung durch die Maschinenkinematik sichergestellt werden und andererseits die Messwerterfassung und -übertragung an die Steuerung ermöglicht werden. Hierbei muss die Energieversorgung des Messsystems meist durch Batterien oder Akkumulatoren realisiert werden. Die Datenübertragung zu einer festen Auswertungsstation findet standardgemäß über Infrarotsender und -Empfänger statt, zunehmend auch über Funk.

Jedoch ist die Versorgung mittels Batterie oder Akkumulator meist eine einschränkende Größe, da die Sicherstellung der Energieversorgung so zu zusätzlichem Wartungs- und Betreuungsaufwand führt. Die Ladestation ist normalerweise außerhalb der Werkzeugmaschine angesiedelt, oder es muss die betreffende Applikation zum Batteriewechsel aus der Werkzeugmaschine entnommen werden. Darüber hinaus stellt die Energieversorgung bei Sensorsystemen oder ggf. auch aktiv arbeitenden, aktorischen Systemen generell eine Einschränkung dar. Daran und an der extrem rauen Umgebung im Arbeitsraum von Werkzeugmaschinen scheitert grundsätzlich die Ausstattung von an sich bekannten Werkzeugen mit zusätzlicher Intelligenz.

Vor diesem Hintergrund besteht ein Bedarf an Werkzeugüberwachungssystemen, die bei Werkzeugmaschinen ohne externe Energieversorgung arbeiten können.

Aus der DE 10 2008 009 340 A1 ist ein Werkzeugspannsystem bekannt, bei dem zur Anzeige einer Störung an einer Spindel an der Werkzeugspindel ein Sender vorgesehen ist, mit dem ein Signal, das eine Störung anzeigt, drahtlos übertragbar ist. Zur Energieversorgung ist ein Piezoelement an der Werkzeugspindel vorgesehen.

Aus der DE 10 2009 031 925 A1 ist ferner eine Widerstandsschweißeinrichtung bekannt, weiche eine Schweißzange mit Elektroden und wenigstens einen nach dem Seebeck-Effekt arbeitenden thermoelektrischen Generator zur Umwandlung von beim Schweißen entstehender Wärme in elektrische Energie aufweist. Der thermoelektrische Generator kann zur Überwachung der Temperatur der Schweißelektroden genutzt werden

Der Erfindung liegt die Aufgabe zugrunde, ein Werkzeugspannsystem mit einem Werkzeughalter zur Spannung eines Werkzeugs zu schaffen, das eine Energieversorgung zur Erzeugung von elektrischer Energie ohne eine externe Spannungsversorgung in Form einer Batterie oder eines Akkumulators erlaubt.

Diese Aufgabe wird erfindungsgemäß bei einem Werkzeugspannsystem mit den Merkmalen des Anspruchs 1 gelöst.

Die Aufgabe der Erfindung wird auf diese Weise vollkommen gelöst.

Erfindungsgemäß wird nämlich die ohnehin beim Werkzeugspannsystem vorhandene thermische Energie genutzt, um hieraus elektrische Energie zu erzeugen. Es kann die thermische Energie genutzt werden, die sich insbesondere durch die Erwärmung des Werkzeugs im Bereich der Schneide(n) einstellt.

Mit Seebeck-Elementen lassen sich Temperaturdifferenzen unmittelbar in elektrische Energie umsetzen. So kann die thermische Energie, die durch die Bearbeitung infolge der Erwärmung der Schneide(n) frei wird, unmittelbar in elektrische Energie umgesetzt werden.

Die von dem mindestens einen Seebeck-Element erzeugte Spannung kann nach geeigneter Stabilisierung und Glättung zur drahtlosen Übertragung eines Nutzsignals an eine stationäre Auswerteschaltung verwendet werden. Die Übertragung kann hierbei etwa über Funk, über RFID, über WLAN etc. erfolgen. Einerseits können die Ausgangsspannungen verschiedener Seebeck-Elemente selbst als Nutzsignal zur Überwachung eines Betriebsparameters genutzt werden. Andererseits können mit Hilfe der erzeugten Spannung ein oder mehrere Sensoren betrieben werden, die zur Überwachung bestimmter Betriebsparameter verwendet werden.

In vorteilhafter Weiterbildung dieser Ausführung ist das mindestens eine Seebeck-Element im Werkzeug in einem Bereich zwischen einer Schneide oder einem Schneidenträger und einem Kühlkanal des Werkzeugs angeordnet.

in diesem Bereich ergibt sich typischerweise die maximale Temperaturdifferenz zwischen der heißen Schneide und dem Kühlkanal. Somit ergibt sich eine maximale Ausbeute bei der Spannungserzeugung.

Gemäß einer weiteren Ausgestaltung der Erfindung ist das mindestens eine Seebeck-Eiement im Bereich des Schneidenträgers vorzugsweise im Kontakt mit einer Schneidplatte angeordnet.

Auf diese Weise kann die thermische Energie, die sich insbesondere an der Schneide bzw. der Schneidplatte durch die Erwärmung ergibt, besonders vorteilhaft ausgenutzt werden.

In vorteilhafter Weiterbildung der Erfindung ist das mindestens eine Seebeck-Element federnd gegen die Schneide bzw. die Schneidplatte beaufschlagt.

Auf diese Weise kann ein besonders guter Kontakt hergestellt werden.

In zusätzlicher Weiterbildung der Erfindung ist das mindestens eine Seebeck-Element mittels Thermokontaktgel befestigt.

Auf diese Weise können Unebenheiten an der Kontaktfläche zwischen dem Seebeck-Element und der Schneidplatte ausgeglichen werden, so dass ein optimaler Wärmeübergang ermöglicht ist.

In weiter vorteilhafter Ausgestaltung der Erfindung sind mehrere Seebeck-Elemente vorgesehen, die vorzugsweise parallel miteinander verschaltet sind.

Auf diese Weise kann die Energieausbeute verbessert werden; zusätzlich kann durch eine Temperaturüberwachung an verschiedenen Stellen gleichzeitig eine Prozessüberwachung stattfinden.

In weiter vorteilhafter Ausgestaltung der Erfindung sind die parallel geschalteten Seebeck-Elemente über Schwellwertschalter miteinander gekoppelt und vorzugsweise jeweils über hochohmige Widerstände kurzgeschlossen.

Sofern die einzelnen Seebeck-Elemente unterschiedliche Ausgangsspannungen liefern, werden durch die Schwellwertschalter interne Verluste verhindert. Unterhalb des Schwellwertes wird die Spannung des jeweiligen Seebeck-Elementes über einen hochohmigen Widerstand kurzgeschlossen.

Auf diese Weise kann eine solide Spannungsversorgung realisiert werden.

Die hochohmigen Widerstände sind auf jeden Fall größer als der Widerstand eines Verbrauchers, der mit der Schaltung versorgt wird. Da sich dann, wenn sich das Temperaturgefälle umkehrt, bei einem Seebeck-Element eine Polaritätsumkehr ergibt, ist gemäß einer weiter vorteilhaften Ausgestaltung der Erfindung die Ausgangsspannung von mehreren parallel geschalteten Seebeck-Elementen, die vorzugsweise über Schwellwertschalter miteinander gekoppelt sind, einem Gleichrichter, vorzugsweise einem Brückengleichrichter, zugeführt.

Auf diese Weise wird eine optimale Spannungsausbeute gewährleistet und interne Ausgleichsströme werden vermieden.

Gemäß einer weiteren Ausgestaltung der Erfindung ist die Ausgangsspannung des mindestens einen Seebeck-Elementes einer Einrichtung zur Spannungsstabilisierung zugeführt, die vorzugsweise mindestens eine Zener-Diode und/oder einen Kondensator aufweist.

Mit einer derartigen Ausgestaltung lässt sich eine stabile Spannungsversorgung erzielen.

Gemäß einer weiteren Ausgestaltung der Erfindung ist die Ausgangsspannung der Seebeck-Elemente einem Differenzverstärker oder Vergleicher zugeführt.

Auf diese Weise können die Seebeck-Elemente selbst als Sensor zur Überwachung eines Betriebsparameters genutzt werden, da aus der Ausgangsspannung der Seebeck-Elemente Rückschlüsse über den Zustand des Gesamtsystems getroffen werden können.

Sind etwa bei einem Bohrer mit zwei Schneiden zwei Seebeck-Elemente symmetrisch aufgenommen, so ist im Normalzustand davon auszugehen, dass beide Seebeck-Elemente dieselbe Ausgleichsspannung liefern. Erzeugt der Differenzverstärker somit eine Ausgangsspannung von annähernd 0, so ist davon auszugehen, dass sich der Prozess im Gleichgewicht befindet. Dies bedeutet, dass beide Schneiden intakt sind und dass die zugeordneten Kühlkanäle korrekt arbeiten.

Ergibt sich jedoch eine Ausgangsspannung, die von 0 verschieden ist, so ist entweder eine der beiden Schneiden verschlissen oder der zugeordnete Kühlkanal verstopft. Je nach Polarität der Ausgangsspannung ist hierbei entweder die Schneide 1 bzw. der Kühlkanal 1 betroffen oder aber die Schneide 2 bzw. der Kühlkanal 2 betroffen.

Auf diese Weise kann mit besonders einfachen Mitteln eine verlustarme Überwachung im Betrieb durchgeführt werden. Solche Informationen sind besonders bei der Implementierung von Minimalmengenschmierung (MMS) von Werkzeugen mit mehreren Schneiden hilfreich, um eine gleichmäßige Benetzung aller Schneiden sicherzustellen.

Bei dem Betriebsparameter kann es sich hierbei etwa um die Temperatur des Werkzeugs, die Temperatur des Kühlmittels, die Schnittkraft, Beschleunigung oder die Schneidenintegrität des Werkzeugs handeln. Sofern ein separater Sensor verwendet wird, so ist dieser vorzugsweise im Werkzeug aufgenommen und wird von dem mindestens einen Seebeck-Element mit Spannung versorgt. Das Ausgangssignal wird vorzugsweise drahtlos mittels einer Sendeeinrichtung an eine stationäre Auswerteschaltung übertragen.

Da der Platz im Werkzeug selbst äußerst begrenzt ist, ist es gemäß einer weiteren Ausgestaltung der Erfindung vorgesehen, das Werkzeug mit dem Werkzeughalter über eine elektrische Schnittstelle zur Übertragung eines elektrischen Signals zu koppeln.

Auf diese Weise kann im Werkzeug etwa lediglich das mindestens eine Seebeck-Element angeordnet werden, während sämtliche weiteren Elemente im Werkzeughalter vorgesehen sind. So kann etwa im Werkzeughalter eine Sendeeinrichtung zur drahtlosen Übertragung eines Signals vorgesehen sein.

Soweit von dem mindestens einen Seebeck-Element ein Sensor mit Spannung versorgt werden soll, so ist es sinnvoll, diesen im Werkzeug zu integrieren, um eine möglichst sensitive Parametererfassung zu ermöglichen.

Je nach Größen- und Einbauverhältnissen kann es jedoch erforderlich sein, den Sensor auch im Werkzeughalter vorzusehen.

Denkbar ist auch eine Unterbringung des Seebeck-Elementes auch in eine sintertechnisch oder mittels anderer geeigneter Verfahren eingebrachte Tasche in der Schneide (Wendeschneidplatte) selbst.

In diesem Fall bilden die Schneide und das Seebeck-Element eine Einheit bilden und im der Schneidenträger wird nur noch der thermische Kontakt mit den Kühlkanälen bzw. dem anderen zur Verfügung stehenden Temperaturpol realisiert.

Gemäß einer weiteren Ausführung der Erfindung wird das Ausgangssignal des mindestens einen Piezoelements an eine Steuerung der Antriebsmaschine als Regelgröße rückgekoppelt.

Das rückgekoppelte Signal kann vorteilhaft zur Prozessadaption verwendet werden.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine vereinfachte Ansicht eines erfindungsgemäßen Werkzeugspannsystems am Beispiel eines Kurzlochbohrers;
- Fig. 2: eine Aufsicht des Werkzeugspannsystems gemäß Fig. 1;
- Fig. 3: eine Aufsicht auf eine Wendeschneidplatte, die auf einem Schneidenträger aufgenommen ist, wobei Einbaupositionen für ein Seebeck-Element angedeutet sind;
- Fig. 4: einen Schnitt durch einen Schneidenträger mit daran festgeschraubter Wendeschneidplatte, wobei unterhalb der Wendeschneidplatte ein Seebeck-Element federnd aufgenommen ist;
- Fig. 5: eine vereinfachte schematische Darstellung eines Werkzeugspannsystems, bei dem eine elektrische Schnittstelle zwischen dem Ende eines Schaftes des Werkzeugs und der Werkzeugaufnahme angedeutet ist und
- Fig. 6: eine beispielhafte Schaltung mit zwei Seebeck-Elementen, die parallel miteinander verschaltet und über Schwellwertschalter gekoppelt sind, mit nachfolgendem Gleichrichter und Spannungsstabilisator und Differenzverstärker zum Vergleichen der Ausgangsspannungen der Seebeck-Elemente, sowie ferner noch mit einem optionalen zusätzlichen Sensor und einer optionalen Sendeeinheit.

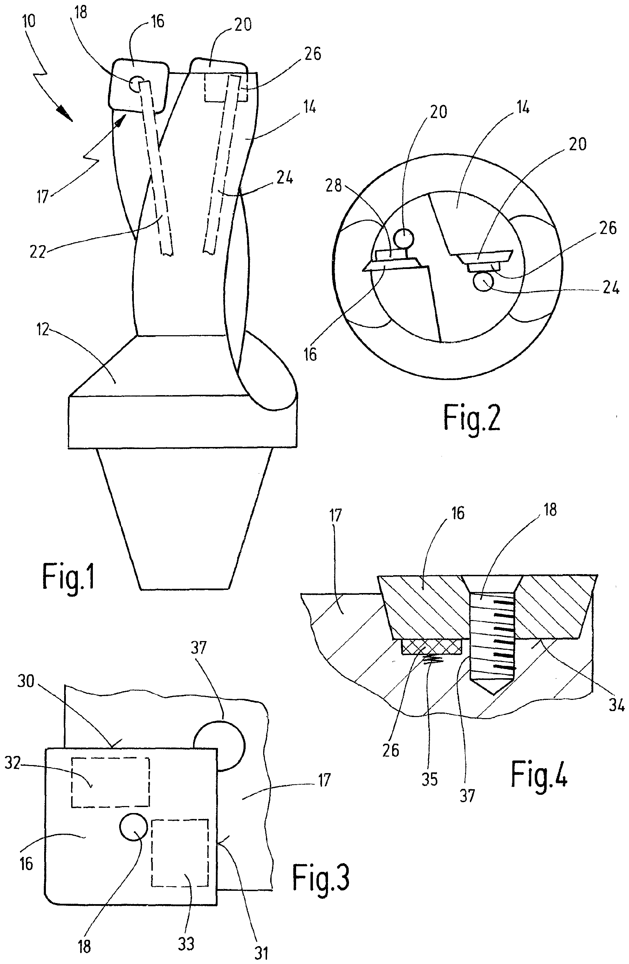

In Fig. 1 ist eine beispielhafte Ausführung eines erfindungsgemäßen Werkzeugspannsystems dargestellt. Es handelt sich hierbei um einen Kurzlochbohrer mit zwei Schneiden in Form von Wendeschneidplatten.

Das Werkzeugspannsystem 10 weist einen Werkzeughalter 12 auf, an dem ein Werkzeug 14 in Form des Kurzlochbohrers aufgenommen ist. Wie insbesondere auch aus der Aufsicht gemäß Fig. 2 zu ersehen ist, sind am äußeren Ende des Werkzeugs 14 zwei Schneiden 16, 20 aufgenommen, die an Wendeschneidplatten ausgebildet sind.

Wie bei Kurzlochbohrern üblich, sind die beiden Schneiden 16, 20 gegenüber der Längsmittelachse leicht asymmetrisch radial versetzt aufgenommen. Die Schneiden 16, 20 bzw. Wendeschneidplatten sind in der üblichen Weise mit Befestigungsschrauben 18 an den zugeordneten Schneidenträgern 17 befestigt. Jedem Schneidenträger 17 ist ein Kühlkanal zugeordnet, wobei die beiden Kühlkanäle in Fig. 1 schematisch gestrichelt durch 22 und 24 im äußeren Bereich angedeutet sind.

Zwischen jedem Schneidenträger 17 und dem zugeordneten Kühlkanal 22, 24 ist ein Seebeck-Element 26, 28 angeordnet (Fig. 2).

Auf diese Weise befinden sich die Seebeck-Elemente 26, 28 jeweils im Bereich der maximalen Temperaturdifferenz, so dass eine maximale Energieausbeute erreicht wird.

In Fig. 3 ist beispielhaft eine Einbaulage für das Seebeck-Element skizziert. Am Schneidenträger 17 ist In grundsätzlich bekannter Weise eine Vertiefung vorgesehen, an dem die Schneide 16 in Form der Wendeschneidplatte gehaltert und mit einer Befestigungsschraube 18 befestigt ist. Hierbei dienen zugeordnete Anlagekanten 30, 31 zur Abstützung im Kraft aufnehmenden Bereich. Im Eckbereich kann eine Ausnehmung 37 zwischen den beiden Anlagekanten 30, 31 vorgesehen sein, um eine Beanspruchung der Ecke der Wendeschneidplatte zu vermeiden. Am unteren Grund der Vertiefung im Schneidenträger 17 kann das betreffende Seebeck-Element vorzugsweise in Kontakt mit der darüber aufgenommenen Wendeschneidplatte angeordnet sein, wie beispielhaft mit den gestrichelten Positionen 32 und 33 angedeutet ist. Die Einbaulage ist hierbei derart getroffen, dass sich das Seebeck-Element nicht unmittelbar im maximal beanspruchten Kraft aufnehmenden Bereich befindet.

In Fig. 4 ist beispielhaft im Schnitt dargestellt, wie das Seebeck-Element 26 unterhalb der unteren Auflagefläche 34 für die Wendeschneidplatte 16 eingebaut sein kann. Zum Andruck an die Wendeschneidplatte 16 kann hierbei zusätzlich ein Federelement 35 vorgesehen sein und zur Verbesserung des thermischen Kontaktes kann zusätzlich Wärmekontaktgel verwendet werden.

In Fig. 4 ist die Einbaulage für die Wendeschneidplatte 16 lediglich schematisch zusammen mit der zugehörigen Befestigungsschraube 18 skizziert. In der Praxis ist der Gewindeabschnitt 37 im Schneidenträger 17 entgegen der Lastrichtung gegenüber der normalen Einbaulage der Befestigungsschraube 18 seitlich versetzt, um eine bessere Kraftaufnahme zu ermöglichen. Auf diese Darstellung wurde hier aus Vereinfachungsgründen verzichtet.

Denkbar ist auch eine Unterbringung des Seebeck-Elementes 26 auch in eine sintertechnisch oder mittels anderer geeigneter Verfahren eingebrachte Tasche in der Schneide (Wendeschneidplatte) selbst, wobei dann Schneide und Seebeck-Element 26 eine Einheit bilden und in der Wendeschneidplattenaufnahme 34 nur noch der thermische Kontakt mit den Kühlkanälen bzw. dem anderen zur Verfügung stehenden Temperaturpol realisiert wird.

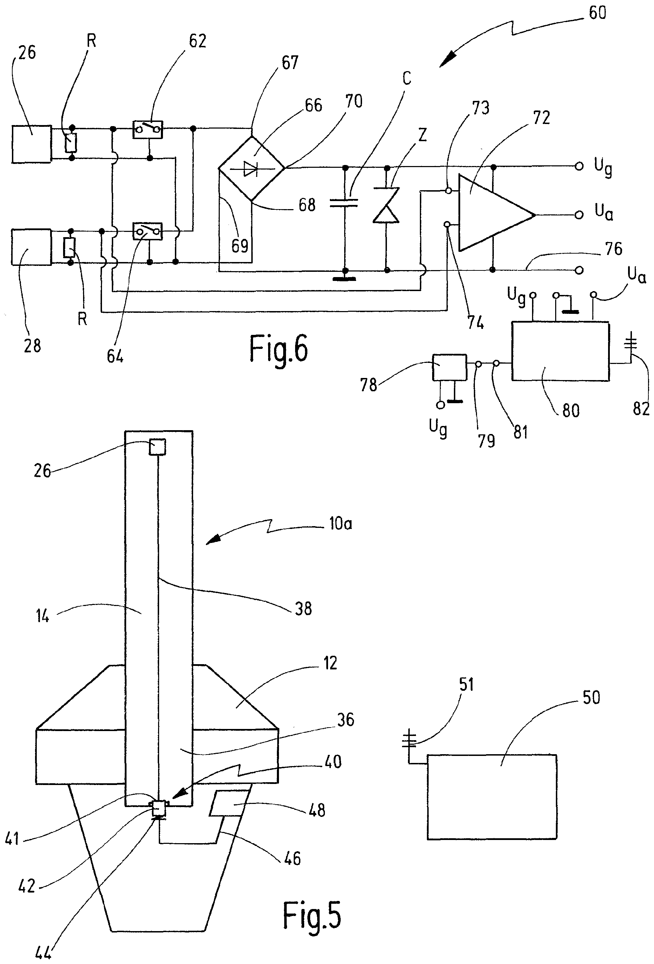

In Fig. 5 ist schematisch angedeutet, wie bei einem Werkzeugspannsystem das Ausgangssignal des mindestens einen Seebeck-Elementes 26 über eine elektrische Schnittstelle auf den Werkzeughalter 12 übertragen werden kann.

Bei dem insgesamt mit 10a bezeichneten Werkzeugspannsystem werden für entsprechende Teile im Übrigen entsprechende Bezugsziffern verwendet. Im äußeren Bereich des Werkzeugs 14 ist im Bereich einer Schneide schematisch ein Seebeck-Element 26 angedeutet. Das Werkzeug 14 ist mit seinem Schaft 36 in einer zugeordneten Ausnehmung des Werkzeughalters 12 gespannt, z.B. durch Schrumpfspannung oder in üblicher Weise durch mechanisches Spannen. Am unteren Ende des Werkzeugschaftes 36 ist eine insgesamt mit 40 bezeichnete elektrische Schnittstelle vorgesehen, über die das über eine Leitung 38 vom Seebeck-Element 26 übertragene Signal über eine Kontaktfläche 41 mit Hilfe eines daran anliegenden Kontaktstiftes 42 zum Werkzeughalter 12 übertragen wird. Die Kontaktfläche 41 am Werkzeugschaft 36 ist mittels geeigneter Keramikflächen gegen den übrigen Teil des Werkzeugschaftes 36 elektrisch isoliert. Der Kontaktstift 42 ist gleichfalls elektrisch isoliert im Werkzeughalter 12 aufgenommen und vorzugsweise mittels eines Federelementes 44 federnd gegen die Kontaktfläche 41 beaufschlagt, um eine möglichst sichere und zuverlässige Kontaktierung zu gewährleisten. Das vom Kontaktstift 22 aufgenommene Signal wird über eine Leitung, die schematisch mit 46 angedeutet ist, an eine Sendeeinheit im Werkzeughalter 12 übertragen, in der eine Aufbereitung des Signals und eine Übertragung per Funk an eine zugeordnete stationäre Auswerteschaltung 50 erfolgt. Es versteht sich, dass die Sendeeinheit 48 mit einer geeigneten Antenne versehen ist, so dass das Signal von einer stationären Auswerteschaltung 50 über eine zugeordnete Antenne 51 empfangen und ausgewertet werden kann.

In Fig. 6 ist beispielhaft eine Schaltung 60 dargestellt, die zur Überwachung eines Werkzeugs mittels zweier Seebeck-Elemente 26, 28 vorgesehen ist. Beide Seebeck-Elemente 26, 28 sind über Schwellwertschalter 62, 64, die erst dann öffnen, wenn das betreffende Seebeck-Element eine bestimmte Mindestspannung überschreitet, parallel miteinander verschaltet. Die von den beiden Schwellwertschaltern 62, 64 bei Durchschalten ausgegebene Ausgangsspannung ist an die beiden Eingänge 67, 68 eines Brückengleichrichters 66 gelegt. Die beiden Ausgänge des Brückengleichrichters 69, 70 dienen zur Erzeugung einer stabilisierten Gleichspannung und zur Versorgung eines Differenzverstärkers 72. Zur Spannungsstabilisierung sind ein Kondensator C und eine Zener-Diode Z vorgesehen. Der eine Ausgang 69 liegt gemeinsam mit dem Kondensator C und der Zener-Diode Z sowie dem Differenzverstärker 72 auf Masse 76. Der andere Ausgang 70 des Brückengleichrichters 66 liefert die gesamte Ausgangsspannung U_{g} und dient u.a. zur Versorgung des Differenzverstärkers 72.

An den beiden Eingängen des Differenzverstärkers 73 und 74 liegen die beiden Ausgangssignale des ersten Seebeck-Elementes 26 und des zweiten Seebeck-Elementes 28.

Zusätzlich sind die beiden Seebeck-Elemente 26, 28 durch einen hochohmigen Widerstand R belastet, der einen Spannungsabbau erlaubt, wenn der jeweilige Schwellwertschalter 62, 64 nicht durchschaltet. Dieser Widerstand R ist ausreichend hochohmig, d.h. in jedem Falle deutlich größer als der Widerstand einer Last, mit dem die Nutzspannung U_{g} belastet ist.

Ergibt sich am Ausgang des Differenzverstärkers eine Spannung Uₐ von annähernd 0, so liefern beide Seebeck-Elemente 26, 28 die gleiche Ausgangsspannung.

Bei symmetrischem Einbau und ansonsten gleichförmigen Verhältnissen zeigt dies, dass die zugeordneten Schneiden 16, 20 intakt sein müssen und dass die zugeordneten Kühlkanäle 22, 24 gleichbleibend arbeiten.

Ergibt sich jedoch eine Ausgangsspannung Uₐ, die von 0 verschieden ist, so beruht dies darauf, dass entweder eine der beiden Schneiden 16, 20 ungleich verschlissen ist oder dass einer der beiden Kühlkanäle 22, 24 verstopft ist.

Je nachdem, ob die Ausgangsspannung Uₐ größer als 0 oder kleiner als 0 ist, ist entweder die eine Schneide 16 oder die andere Schneide 20 bzw. der zugeordnete Kühlkanal 22 bzw. 24 betroffen.

In Fig. 6 ist zusätzlich noch mit Ziffer 80 eine zugeordnete Auswerte- und Sendeeinheit 80 dargestellt, die mittels einer Antenne 82 eine drahtlose Übertragung eines Nutzsignals an eine stationäre Auswerteeinheit ermöglicht. Zur Spannungsversorgung dient die gesamte Nutzspannung U_{g}, während als Eingang die Ausgangsspannung Uₐ des Differenzverstärkers 72 verwendet sein kann. Über eine Antenne 82 wird das hochfrequente Signal an eine stationäre Auswerteeinheit übertragen. Die stationäre Auswerteeinheit kann auch in eine zentrale Maschinensteuerung integriert sein, von der das extrahierte Signal zur Anpassung des Arbeitsprozesses genutzt wird.

Beispielhaft ist mit Ziffer 78 noch ein weiterer Sensor angedeutet, der mit der Spannung U_{g} betrieben wird und dessen Ausgangssignal 79 an einen zugeordneten Eingang 81 der Auswerte- und Sendeeinheit 80 angekoppelt sein kann. Mit einem derartigen Sensor 78 können andere Betriebsparameter überwacht werden.

## Patentansprüche

1. Werkzeugspannsystem mit einem Werkzeughalter (12) zum Spannen eines Werkzeugs (14), mit einer Einrichtung zur Erzeugung von elektrischer Energie aus thermischer Energie des Werkzeugspannsystems (10, 10a), **dadurch gekennzeichnet, dass** die Einrichtung zur Erzeugung von elektrischer Energie mindestens ein Seebeck-Element (26, 28) zur Erzeugung einer Spannung aus thermischer Energie des Werkzeugspannsystems (10) aufweist, und dass die Ausgangsspannung des mindestens einen Seebeck-Elementes (26, 28) einem Verbraucher in Form eines Sensors (78) und/oder eines Senders (48) zur drahtlosen Übertragung eines Nutzsignals an eine stationäre Auswerteschaltung (50) zugeführt ist.

2. Werkzeugspannsystem nach Anspruch 1, **dadurch gekennzeichnet,**
**dass** das mindestens eine Seebeck-Element (26, 28) im Werkzeug (14) in einem Bereich zwischen einer Schneide (16, 20) oder einem Schneidenträger (17) und einem Kühlkanal (22, 24) des Werkzeugs (14) angeordnet ist.

3. Werkzeugspannsystem nach einem der vorhergehenden Ansprüche, **dadurch gekennzeichnet, dass** das mindestens eine Seebeck-Element (26, 28) im Bereich des Schneidenträgers (17), vorzugsweise in Kontakt mit einer Schneidplatte, angeordnet ist.

4. Werkzeugspannsystem nach einem der vorhergehenden Ansprüche, **dadurch gekennzeichnet, dass** das mindestens eine Seebeck-Element (26, 28) federnd gegen die Schneide bzw. Schneidplatte beaufschlagt ist.

5. Werkzeugspannsystem nach einem der vorhergehenden Ansprüche, **dadurch gekennzeichnet, dass** das mindestens eine Seebeck-Element (26, 28) mittels Thermokontaktgel befestigt ist.

6. Werkzeugspannsystem nach einem der vorhergehenden Ansprüche, **dadurch gekennzeichnet, dass** mehrere Seebeck-Elemente (26, 28) vorgesehen sind, die vorzugsweise parallel miteinander verschaltet sind.

7. Werkzeugspannsystem nach Anspruch 6, **dadurch gekennzeichnet, dass** die Seebeck-Elemente (26, 28) über Schwellwertschalter (62, 64) miteinander gekoppelt sind und vorzugsweise jeweils über hochohmige Widerstände (R) kurzgeschlossen sind.

8. Werkzeugspannsystem nach einem der Ansprüche 6 oder 7, **dadurch gekennzeichnet, dass** die Ausgangsspannung von mehreren parallel geschalteten Seebeck-Elementen (26, 28), die vorzugsweise über Schwellwertschalter (62, 64) miteinander gekoppelt sind, einem Gleichrichter (66), vorzugsweise einem Brückengleichrichter, zugeführt ist.

9. Werkzeugspannsystem nach einem der Ansprüche 1 bis 8, **dadurch gekennzeichnet, dass** die Ausgangsspannung des mindestens einen Seebeck-Elementes (26, 28) einer Einrichtung zur Spannungsstabilisierung zugeführt ist, die vorzugsweise mindestens eine Zener-Diode (Z) und/oder einen Kondensator (C) aufweist.

10. Werkzeugspannsystem nach einem der Ansprüche 6 bis 9, **dadurch gekennzeichnet, dass** die Ausgangsspannung der Seebeck-Elemente (26, 28) einem Differenzverstärker (72) oder Vergleicher zugeführt ist.

11. Werkzeugspannsystem nach einem der Ansprüche 1 bis 10, **dadurch gekennzeichnet, dass** das Ausgangssignal des mindestens einen Seebeck-Elements (26, 28) als Sensorsignal zur Überwachung eines Betriebsparameters des Werkzeugspannsystems (10, 10a) verwendet wird.

12. Werkzeugspannsystem nach einem der Ansprüche 1 bis 12, **dadurch gekennzeichnet, dass** ein Sensor (78) im Werkzeug (14) aufgenommen ist, der von dem mindestens einen Seebeck-Element (26, 28) mit Spannung versorgt wird, und dessen Ausgangssignal zur Überwachung eines Betriebsparameters des Werkzeugspannsystems (10, 10a) an eine stationäre Auswerteschaltung (50) drahtlos mittels einer Sendeeinrichtung (48, 80) übertragen wird, wobei der Betriebsparameter vorzugsweise aus der Gruppe ausgewählt ist, die aus der Temperatur des Werkzeugs (14), der Temperatur des Kühlmittels, der Schnittkraft oder Beschleunigung und der Schneidenintegrität des Werkzeugs (14) besteht.

13. Werkzeugspannsystem nach einem der Ansprüche 1 bis 12, **dadurch gekennzeichnet, dass** im Werkzeughalter (12) eine Sendeeinrichtung (48, 80) zur drahtlosen Übertragung eines Signals vorgesehen ist.

14. Werkzeugspannsystem nach einem der vorhergehenden Ansprüche, **dadurch gekennzeichnet, dass** das Ausgangssignal des mindestens einen Seebeck-Elements (26, 28) an eine Steuerung der Antriebsmaschine als Regelgröße rückgekoppelt ist.

15. Werkzeugspannsystem nach einem der Ansprüche 2 bis 14, **dadurch gekennzeichnet, dass** das mindestens eine Seebeck-Element (26, 28) in eine Tasche in der Schneide (Wendeschneidplatte) selbst integriert ist.

## Claims

1. A tool clamping system comprising a tool holder (12) for clamping a tool (14), a device for generating electrical energy from thermal energy of the tool clamping system (10, 10a), **characterized in that** the device for generating electrical energy from thermal energy of the tool clamping system (10) comprises at least one Seebeck element (26, 28) for generating a voltage from thermal energy of the tool clamping system (10), and **in that** the output voltage of the at least one Seebeck element (26, 28) is fed to a consumer in the form of a sensor (78) and/or a transmitter (48) for the wireless transfer of a useful signal to a stationary evaluation circuit (50).

2. The tool clamping system according to claim 1, **characterized in that** the at least one Seebeck element (26, 28) is arranged within the tool (14) in a region between a cutting edge (16, 20) or a cutting edge support (17) and a cooling channel (22, 24) of the tool (14).

3. The tool clamping system according to any of the preceding claims, **characterized in that** the at least one Seebeck element (26, 28) is arranged within a region of the the cutting edge support (17), preferably in contact with a cutting plate.

4. The tool clamping system according to any of the preceding claims, **characterized in that** the at least one Seebeck element (26, 28) is applied resiliently against the cutting edge or the cutting plate.

5. The tool clamping system according to any of the preceding claims, **characterized in that** the at least one Seebeck element (26, 28) is fastened by means of thermal contact gel.

6. The tool clamping system according to any of the preceding claims, **characterized in that** a plurality of Seebeck elements (26, 28) are provided, which are preferably connected to one another in parallel.

7. The tool clamping system according to claim 6, **characterized in that** the Seebeck elements (26, 28) are coupled to one another via threshold switches (62, 64) and are preferably short-circuited in each case via high resistances (R).

8. The tool camping system according to any of claims 6 or 7, **characterized in that** the output voltage of a plurality of Seebeck elements (26, 28) connected in parallel, which are preferably coupled to one another via threshold switches (62, 64), is fed to a rectifier (66), preferably a bridge rectifier.

9. The tool clamping system according to any of claims 1 to 8, **characterized in that** the output voltage of the least one Seebeck element (26, 28) is fed to a device for voltage stabilization, which preferably has at least one Zener diode (Z) and/or a capacitor (C).

10. The tool clamping system according to any of claims 6 to 9, **characterized in that** the output voltage of the Seebeck elements (26, 28) is fed to a differential amplifier (72) or comparator.

11. The tool clamping system according to any of claims 1 to 10, **characterized in that** the output signal of the at least one Seebeck element (26, 28) is used as sensor signal for monitoring an operating parameter of the tool clamping system (10, 10a).

12. The tool clamping system according to any of claims 1 to 11, **characterized in that** a sensor (78) is received in the tool (14) and is supplied with voltage by the at least one Seebeck element (26, 28), the output signal of the sensor being transferred preferably wirelessly to a stationary evaluation circuit (50) by means of a transmitting device (48, 80) in order to monitor an operating parameter of the tool clamping system (10, 10a), wherein the operating parameter is preferably selected from the group consisting of the temperature of the tool (14), the temperature of the coolant, the cutting force or acceleration, and the cutting integrity of the tool (14).

13. The tool clamping system according to any of claims 1 to 12, **characterized in that** a transmitting device (48, 80) for the wireless transfer of a signal is provided in the tool holder (12).

14. The tool clamping system according to any of the preceding claims, **characterized in that** the output signal of the at least one Seebeck element (26, 28) is fed back to a controller of the drive machine as control variable.

15. The tool clamping system according to any of claims 2 to 14, **characterized in that** the at least one Seebeck element (26, 28) is integrated in a pocket in the cutting edge (indexable insert) itself.

## Revendications

1. Système de serrage d'outil pourvu d'un porte-outil (12) et destiné à serrer un outil (14), ledit système comprenant un dispositif de génération d'énergie électrique à partir de l'énergie thermique du système de serrage d'outil (10, 10a), **caractérisé en ce que** le dispositif de génération d'énergie électrique comporte au moins un élément à effet Seebeck (26, 28) destiné à générer une tension à partir de l'énergie thermique du système de serrage d'outil (10), et **en ce que** la tension de sortie de l'au moins un élément à effet Seebeck (26, 28) est amenée à un consommateur se présentant sous la forme d'un capteur (78) et/ou d'un émetteur (48) pour transmettre sans fil un signal utile à un circuit d'évaluation stationnaire (50).

2. Système de serrage d'outil selon la revendication 1, **caractérisé en ce que** l'au moins un élément à effet Seebeck (26, 28) est disposé dans l'outil (14) dans une région située entre une lame (16, 20) ou un porte-lame (17) et un conduit de refroidissement (22, 24) de l'outil (14).

3. Système de serrage d'outil selon l'une des revendications précédentes, **caractérisé en ce que** l'au moins un élément à effet Seebeck (26, 28) est disposé dans la région du porte-lame (17), de préférence en contact avec une plaque de coupe.

4. Système de serrage d'outil selon l'une des revendications précédentes, **caractérisé en ce que** l'au moins un élément à effet Seebeck (26, 28) est contraint par ressort contre la lame ou la plaque de coupe.

5. Système de serrage d'outil selon l'une des revendications précédentes, **caractérisé en ce que** l'au moins un élément à effet Seebeck (26, 28) est fixé au moyen d'un gel de contact thermique.

6. Système de serrage d'outil selon l'une des revendications précédentes, **caractérisé en ce qu'**une pluralité d'éléments à effet Seebeck (26, 28) sont prévus qui sont de préférence reliés parallèlement les uns aux autres.

7. Système de serrage d'outil selon la revendication 6, **caractérisé en ce que** les éléments à effet Seebeck (26, 28) sont accouplés les uns aux autres par le biais de commutateurs à seuil (62, 64) et sont de préférence chacun court-circuités par le biais de résistances (R) fortement ohmiques.

8. Système de serrage d'outil selon l'une des revendications 6 et 7, **caractérisé en ce que** la tension de sortie d'une pluralité d'éléments à effet Seebeck (26, 28), qui sont montés en parallèle et qui sont de préférence accouplés les uns aux autres par le biais de commutateurs à seuil (62, 64), est appliquée à un redresseur (66), de préférence un pont redresseur.

9. Système de serrage d'outil selon l'une des revendications 1 à 8, **caractérisé en ce que** la tension de sortie de l'au moins un élément à effet Seebeck (26, 28) est appliquée à un dispositif de stabilisation de tension qui comporte de préférence au moins une diode Zener (Z) et/ou un condensateur (C).

10. Système de serrage d'outil selon l'une des revendications 6 à 9, **caractérisé en ce que** la tension de sortie des éléments à effet Seebeck (26, 28) est appliquée à un amplificateur différentiel (72) ou un comparateur.

11. Système de serrage d'outil selon l'une des revendications 1 à 10, **caractérisé en ce que** le signal de sortie de l'au moins un élément à effet Seebeck (26, 28) est utilisé comme signal de capteur pour surveiller un paramètre de fonctionnement du système de serrage d'outil (10, 10a).

12. Système de serrage d'outil selon l'une des revendications 1 à 11, **caractérisé en ce qu'**un capteur (78) est reçu dans l'outil (14), lequel capteur est alimenté en tension par l'au moins un élément à effet Seebeck (26, 28), et son signal de sortie est transmis sans fil à un circuit d'évaluation stationnaire (50) au moyen d'un dispositif d'émission (48, 80) pour surveiller un paramètre de fonctionnement du système de serrage d'outil (10, 10a), le paramètre de fonctionnement étant de préférence sélectionné dans le groupe comprenant la température de l'outil (14), la température du liquide de refroidissement, la force ou l'accélération de coupe et l'intégrité de la lame de l'outil (14).

13. Système de serrage d'outil selon l'une des revendications 1 à 12, **caractérisé en ce qu'**un dispositif d'émission (48, 80) est prévu dans le porte-outil (12) pour transmettre un signal sans fil.

14. Système de serrage d'outil selon l'une des revendications précédentes, **caractérisé en ce que** le signal de sortie de l'au moins un élément à effet Seebeck (26, 28) est ramené comme grandeur de régulation à une commande de la machine d'entraînement.

15. Système de serrage d'outil selon l'une des revendications 2 à 14, **caractérisé en ce que** l'au moins un élément à effet Seebeck (26, 28) est intégré dans une poche ménagée dans la lame elle-même (plaque de coupe amovible).
